(19) Europäisches Patentamt
European Patent Office
Office européen des brevets

(11) EP 3 388 135 B1

(12) **EUROPEAN PATENT SPECIFICATION**

(45) Date of publication and mention
of the grant of the patent:
**28.09.2022 Bulletin 2022/39**

(21) Application number: **16873036.4**

(22) Date of filing: **07.12.2016**

(51) International Patent Classification (IPC):
**B01D 53/04** $^{(2006.01)}$    **B01D 53/14** $^{(2006.01)}$
**C01B 3/56** $^{(2006.01)}$    **G01N 21/3504** $^{(2014.01)}$
**H01M 8/0606** $^{(2016.01)}$    **B01D 53/30** $^{(2006.01)}$
**H01M 8/0662** $^{(2016.01)}$    **C01B 3/04** $^{(2006.01)}$
**C01B 3/34** $^{(2006.01)}$    **C01B 3/50** $^{(2006.01)}$
**C01C 1/12** $^{(2006.01)}$    **G01N 21/39** $^{(2006.01)}$

(52) Cooperative Patent Classification (CPC):
**B01D 53/04; B01D 53/30; C01B 3/047; C01B 3/34;**
**C01B 3/50; C01B 3/56; C01C 1/12; H01M 8/0662;**
B01D 2256/16; B01D 2257/406; C01B 2203/0233;
C01B 2203/042; C01B 2203/0435; C01B 2203/048;
C01B 2203/146;      (Cont.)

(86) International application number:
**PCT/JP2016/086434**

(87) International publication number:
**WO 2017/099143 (15.06.2017 Gazette 2017/24)**

(54) **AMMONIA REMOVAL EQUIPMENT, AMMONIA REMOVAL METHOD, AND HYDROGEN GAS PRODUCTION METHOD**

AMMONIAKENTFERNUNGSAUSRÜSTUNG, AMMONIAKENTFERNUNGSVERFAHREN UND WASSERSTOFFGASHERSTELLUNGSVERFAHREN

ÉQUIPEMENT D'ÉLIMINATION D'AMMONIAC, PROCÉDÉ D'ÉLIMINATION D'AMMONIAC, ET PROCÉDÉ DE PRODUCTION DE D'HYDROGÈNE GAZEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.12.2015 JP 2015238988**

(43) Date of publication of application:
**17.10.2018 Bulletin 2018/42**

(73) Proprietors:
• **Showa Denko K.K.**
**Tokyo 105-8518 (JP)**
• **Hiroshima University**
**Higashihiroshima-shi**
**Hiroshima 739-8511 (JP)**

(72) Inventors:
• **AOKI, Takanori**
**Tokyo 105-8518 (JP)**

• **KOJIMA, Yoshitsugu**
**Higashihiroshima-shi**
**Hiroshima 739-8511 (JP)**

(74) Representative: **Strehl Schübel-Hopf & Partner**
**Maximilianstrasse 54**
**80538 München (DE)**

(56) References cited:
JP-A- H06 296 819    JP-A- S56 130 206
JP-A- S56 130 206    JP-A- 2015 059 075
JP-A- 2015 059 075    US-B1- 6 331 281

• **SPIE, PO BOX 10 BELLINGHAM WA 98227-0010
USA, 1 July 2006 (2006-07-01), XP040230487,**

EP 3 388 135 B1

(52) Cooperative Patent Classification (CPC): (Cont.)
G01N 21/39; Y02E 60/36; Y02E 60/50

## Description

Technical Field

The present invention relates to ammonia removal equipment, an ammonia removal method, and a hydrogen gas production method.

Background Art

A hydrogen gas is expected as ultimate clean energy. For example, the hydrogen gas is used as a fuel gas for fuel cells. The hydrogen gas can be produced by electrolysis of water, steam reforming of a natural gas, coal, or waste plastic, or other methods.

When the hydrogen gas as a fuel gas contains ammonia as an impurity, the ammonia gives an adverse effect on an electrolyte membrane or a catalyst layer in a fuel cell. Therefore, the fuel gas is introduced into an adsorber to remove ammonia and is then supplied into the fuel cell.

In addition, two adsorbers are installed in parallel, and these two adsorbers are switched alternately to be operated. Thereby, an adsorbent in an adsorber under suspension after operation can be regenerated, making it possible to remove ammonia continuously.

For example, PTL1 describes a fuel cell system provided with a fuel cell stack and a gas flow section in which a fuel gas to be supplied into the fuel cell stack flows, wherein the gas flow section is provided with an ammonia adsorption section, and the ammonia adsorption section is provided with a first adsorbent and a second adsorbent each having a different ammonia adsorption ability.

Moreover, PTL1 discloses that two ammonia adsorption sections are arranged in parallel.

PTL2 describes a fuel cell system provided with: an adsorber that adsorbs ammonia in a fuel gas; a fuel cell that generates electricity using the fuel gas through the adsorber; hydrogen recovery means that selectively recovers at least hydrogen from a fuel off-gas of the fuel cell and produces a hydrogen-containing gas having a higher hydrogen concentration than the fuel off-gas; stop means that stops supplying the fuel gas into the adsorber; and hydrogen supply means that supplies the hydrogen-containing gas into the adsorber when supplying the fuel gas is stopped by the stop means.

Moreover, PTL2 discloses that a first adsorber and a second adsorber are arranged in parallel as the adsorber.

On the other hand, ammonia is used as a raw material for a hydrogen gas as a fuel gas. Ammonia has received attention as a chemical substance (hydrogen carrier) that makes storage and transportation of hydrogen easy. Ammonia is easily liquefied by being compressed at room temperature at 1 MPa or less, and liquid ammonia is an exceptional hydrogen carrier in that it has an extremely high weight hydrogen density of 17.8% by mass and has a volume hydrogen density that is 1.5 to 2.5 times larger than that of liquid hydrogen.

Ammonia is thus excellent as a hydrogen carrier, but when hydrogen is taken out by decomposing ammonia, ammonia is left in an ammonia decomposition gas. Therefore, a technique for removing ammonia left in the ammonia decomposition gas has also been required for the ammonia decomposition gas.

PTL3 describes a hydrogen production system provided with: an ammonia decomposition apparatus that decomposes ammonia into hydrogen and nitrogen; and an ammonia adsorption apparatus that adsorbs and removes ammonia discharged from the decomposition apparatus, wherein the ammonia adsorption apparatus includes an adsorbent for ammonia, having a heat of ammonia adsorption of 50 to 180 kJ/mol, an ammonia adsorption capacity of 0.1 to 4 mmol/g, and a volume of pore size from 50 nm to 10 $\mu$m of 0.1 to 1 ml/g.

Moreover, PTL3 discloses that two ammonia adsorption apparatuses are arranged in parallel. PTL4 describes other ammonia removal apparatuses.

Citation List

Patent Literature

PTL1: JP 2009-087726 A
PTL2: JP 2011-146175 A
PTL3: JP 2015-059075 A
PTL4: US6331281 B1

Summary of Invention

Technical Problem

As described in PTLs 1 to 3, in the case where switching operation is performed between the two adsorbers arranged in parallel, it is necessary to switch operation from one adsorber before breakthrough occurs therein to the other adsorber. Therefore, it is necessary to switch operation from one adsorber in a state where it still has a sufficient adsorption ability to the other adsorber leaving a margin, so that there is a problem that the frequency of regenerating the adsorbers is increased. In addition, in the case where an adsorber is intended to be used until immediately before breakthrough, it is difficult to predict when the breakthrough occurs, and therefore there is a problem that the breakthrough occurs in the adsorber before being switched, thereby increasing the frequency of producing a gas having a high ammonia concentration.

It is to be noted that in PTL1, the first adsorbent and the second adsorbent are provided in one ammonia adsorption section, and therefore in the case where the breakthrough occurs in either the first adsorbent or the second adsorbent, it is necessary to replace or regenerate both the first adsorbent and the second adsorbent.

The present invention has been completed in view of the above-described points and provides ammonia removal equipment, an ammonia removal method, and a hydrogen gas production method each capable of decreasing the frequency of replacing or regenerating an ammonia removal apparatus and capable of decreasing the frequency of producing a gas having a high ammonia concentration due to breakthrough in an ammonia removal apparatus.

Solution to Problem

The present inventors have conducted diligent studies to find that the above-described problems can be solved by disposing a plurality of ammonia removal apparatuses in series and measuring an ammonia concentration in a gas after being treated by the ammonia apparatuses at previous stages.

That is, the present invention relates to an ammonia removal equipment and method as set forth in the claims.

Advantageous Effects of Invention

According to the present invention, ammonia removal equipment, an ammonia removal method, and a hydrogen gas production method each capable of decreasing the frequency of replacing or regenerating an ammonia removal apparatus and capable of decreasing the frequency of discharging outside a system a gas having a high ammonia concentration due to breakthrough in an ammonia removal apparatus.

Brief Description of Drawings

[Fig. 1] Fig. 1 shows an outline drawing illustrating ammonia removal equipment not according to the present invention.

[Fig. 2] Fig. 2 shows an outline drawing illustrating ammonia removal equipment not according to the present invention.

[Fig. 3] Fig. 3 shows an outline drawing illustrating ammonia removal equipment according to the first embodiment.

[Fig. 4] Fig. 4 shows an outline drawing illustrating ammonia removal equipment according to the second embodiment.

Description of Embodiments

Ammonia removal equipment according to the present disclosure comprises: a first ammonia removal apparatus that removes ammonia in a mixed gas comprising hydrogen and ammonia; a second ammonia removal apparatus that is installed at a stage subsequent to the first ammonia removal apparatus and that treats a first treated gas treated by the first ammonia removal apparatus; and a first ammonia concentration measurement apparatus that measures an ammonia concentration in the first treated gas treated by the first ammonia removal apparatus.

Thereby, even if breakthrough occurs in the first ammonia removal apparatus, a gas having a low ammonia concentration can be produced by the second ammonia removal apparatus. Moreover, the first ammonia removal apparatus can be used until the breakthrough occurs, and therefore the frequency of replacing or regenerating the first ammonia removal apparatus can be decreased.

The first ammonia removal apparatus are detachably attachable apparatuses.

Thereby, the first ammonia removal apparatus after use can be detached and, at a different place, can be regenerated or replaced.

The first ammonia concentration measurement apparatus is preferably a wavelength-scanned cavity ring-down spectroscopy (WS-CRDS) system gas analysis apparatus.

The WS-CRDS system gas analysis apparatus can measure the ammonia concentration in the gas in an extremely short time (several seconds to several tens of seconds). Therefore, the ammonia concentration in the gas can be detected almost in real time, so that the time when the first ammonia concentration measurement apparatus should be regenerated or replaced can be grasped in a timely manner.

The ammonia concentration measurement equipment preferably comprises: a first lead-in pipe that leads the first treated gas treated by the first ammonia removal apparatus into the first ammonia concentration measurement apparatus; a second lead-in pipe that leads a second treated gas treated by the second ammonia removal apparatus into the first ammonia concentration measurement apparatus; and a switching apparatus that is for a measurement apparatus and that switches between operation of communicating the first lead-in pipe with the first ammonia concentration measurement apparatus and operation of communicating the second lead-in pipe with the first ammonia concentration measurement apparatus.

Thereby, the ammonia concentrations in two kinds of gases can be measured by one measurement apparatus.

The ammonia removal equipment preferably comprises a second ammonia concentration measurement apparatus that measures an ammonia concentration in the second treated gas treated by the second ammonia removal apparatus.

Thereby, the ammonia concentration in the gas after being treated can be checked. Moreover, the breakthrough in the second ammonia removal apparatus can be detected.

It is to be noted that the second ammonia concentration measurement apparatus may be a wavelength-scanned cavity ring-down spectroscopy (WS-CRDS) system gas analysis apparatus.

The first ammonia removal apparatus preferably comprises zeolite accommodated therein.

Thereby, ammonia can be removed sufficiently, and zeolite in the first ammonia removal apparatus can be regenerated.

The second ammonia removal apparatus may comprise an acid accommodated therein.

Thereby, ammonia can be removed surely.

The first ammonia removal apparatus comprises: a plurality of first ammonia removal containers installed in parallel; and a first switching apparatus that is capable of supplying the mixed gas into a part or the whole of the plurality of first ammonia removal containers.

In this case, by performing switching operation among a plurality of first ammonia removal containers, the first ammonia removal containers after use are replaced or regenerated to be restored to the operation, so that the first ammonia removal apparatus can be operated continuously.

The second ammonia removal apparatus may comprise: a plurality of second ammonia removal containers installed in parallel; and a second switching apparatus that is capable of supplying the mixed gas into a part or the whole of the plurality of second ammonia removal containers.

Thereby, the second ammonia removal apparatus can be operated continuously.

It is to be noted that in the ammonia removal equipment, one or a plurality of ammonia removal apparatuses may further be connected directly to the second ammonia removal apparatus at a stage subsequent to the second ammonia removal apparatus. For example, a third ammonia removal apparatus may be connected to the second ammonia removal apparatus at a stage subsequent to the second ammonia removal apparatus through a pipe, a fourth ammonia removal apparatus may be connected to the third ammonia removal apparatus at a stage subsequent to the third ammonia removal apparatus through a pipe, or one or a plurality of ammonia removal apparatuses may further be connected to the fourth ammonia removal apparatus, at stage(s) subsequent to the fourth ammonia removal apparatus through a pipe or pipes.

In an ammonia removal method according to the present embodiments, the ammonia removal equipment according to any piece of the above-described equipment is used to treat the mixed gas.

The first ammonia removal apparatus may be regenerated or replaced after the breakthrough occurs in the first ammonia removal apparatus. Thereby, the frequency of replacing or regenerating the first ammonia removal apparatus can be reduced. It is to be noted that even when the breakthrough occurs in the first ammonia removal apparatus in this manner, the ammonia concentration in the gas can be reduced sufficiently by the second ammonia removal apparatus.

In addition, the second ammonia removal apparatus may be regenerated or replaced before the breakthrough occurs in the second ammonia removal apparatus. Thereby, the ammonia concentration in the gas can be reduced sufficiently.

A hydrogen gas production method according to the present embodiments comprises a step of using the ammonia removal equipment according to any piece of the above-described equipment to remove ammonia in the mixed gas.

Hereinafter, the ammonia removal equipment and the ammonia removal method according to the present disclosure will be described with reference to accompanying drawings.

<Overall Structure of Ammonia Removal Equipment>

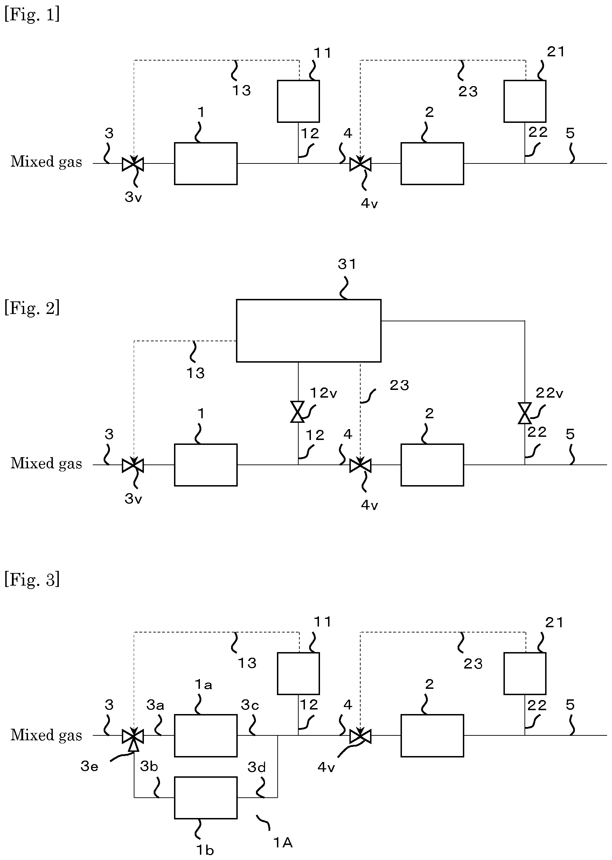

Fig. 1 shows a schematic diagram illustrating the ammonia removal equipment according to the present disclosure, not according to the present invention.

The ammonia removal equipment comprises: a first ammonia removal apparatus 1; a second ammonia removal apparatus 2 that is installed at a stage subsequent to the first ammonia removal apparatus 1 and that treats a first treated gas treated by the first ammonia removal apparatus 1; a first ammonia concentration measurement apparatus 11 that measures an ammonia concentration in the first treated gas treated by the first ammonia removal apparatus 1; and a second ammonia concentration measurement apparatus 21 that measures an ammonia concentration in a second treated gas treated by the second ammonia removal apparatus 2.

A pipe 3 provided with an opening/closing valve 3v is connected to an inflow port of the first ammonia removal apparatus 1. An outflow port of the first ammonia removal apparatus 1 and an inflow port of the second ammonia removal apparatus 2 are connected by a pipe 4 provided with an opening/closing valve 4v. A pipe 5 is connected to an outflow port of the second ammonia removal apparatus 2.

The first ammonia concentration measurement apparatus 11 and the pipe 4 are connected through a first lead-in pipe 12 branching from the pipe 4. The first ammonia concentration measurement apparatus 11 and the opening/closing valve 3v are connected through a lead 13. The first ammonia concentration measurement apparatus 11 is made to be capable of closing the opening/closing valve 3v by sending an opening/closing valve-closing signal to the opening/closing valve 3v through the lead 13 in the case where the measured value of the ammonia concentration exceeds a threshold value.

In addition, the second ammonia concentration measurement apparatus 21 and the pipe 5 are connected through a second lead-in pipe 22 branching from the pipe 5. The second ammonia concentration measurement apparatus 21 and the opening/closing valve 4v are connected through a lead 23. The second ammonia concentration measurement apparatus 21 is made to be capable of closing the opening/closing valve 4v by sending an opening/closing valve-closing signal to the opening/closing valve 4v through the lead 23 in the case where the measured value of the ammonia concentration exceeds a threshold value.

<First Ammonia Removal Apparatus 1>

In the first ammonia removal apparatus 1, an ammonia removal material is accommodated. The ammonia removal material is not particularly limited as long as ammonia in the mixed gas described later can be removed, and examples thereof include: adsorbents such as zeolite, activated carbon, alumina, silica, and composite oxides; acids for removing ammonia through an acid-base reaction with ammonia; and the like.

Among these ammonia removal materials, adsorbents are preferable from the viewpoint of recyclability. In addition, among the adsorbents, zeolite is preferable from the viewpoint of adsorption capacity.

(Zeolite)

Generally, zeolite is a generic name for crystalline aluminosilicates, and zeolite for use in the present disclosure preferably has a pore size of 0.5 nm or more and 2.0 nm or less. When the zeolite has a pore size of 0.5 nm or more, ammonia in the mixed gas can be removed sufficiently. From such a viewpoint, the zeolite preferably has a pore size of 0.6 nm or more, more preferably 0.7 nm or more, and still more preferably 0.8 nm or more. In addition, from the viewpoint of availability, the zeolite preferably has a pore size of 1.9 nm or less, more preferably 1.7 nm or less, and still more preferably 1.5 nm or less.

(Crystal Structure of Zeolite)

Generally, a basic unit of a crystal structure (also referred to as "skeleton structure") of zeolite is a tetrahedron comprising four oxygen atoms surrounding a silicon atom or an aluminum atom, and such tetrahedrons lie in three-dimensional directions to form the crystal structure.

The crystal structure of zeolite is not particularly limited as long as the above-described pore size is satisfied, and examples thereof include various crystal structures represented by structural codes which are composed of three letters of the alphabet specified by the International Zeolite Association. Examples of the structural codes include codes such as LTA, FER, MWW, MFI, MOR, LTL, FAU, and BEA. In addition, a suitable crystal structure, when expressed by the name of the crystal structure, is preferably one selected from the group consisting of an A type, an X type, a β type, a Y type, an L type, a ZSM-5 type, an MCM-22 type, a ferrierite type, and a mordenite type, more preferably one selected from the group consisting of an A type, an X type, and a Y type, and still more preferably an X type or a Y type.

Generally, zeolite has a cation in the crystal structure thereof, and the cation covers a shortage of a positive charge by compensating for a negative charge in the crystal structure composed of the aluminosilicate.

Zeolite for use in the present disclosure is not particularly limited as long as the above-described pore size is satisfied, and the zeolite preferably comprises as the cation at least one selected from the group consisting of a hydrogen ion, a lithium ion, a calcium ion, a sodium ion, a potassium ion, a magnesium ion, and barium ion. The zeolite more preferably comprises as the cation at least one selected from the group consisting of a hydrogen ion, a lithium ion, a calcium ion, a sodium ion, and a potassium ion, and still more preferably comprises as the cation at least one selected from the group consisting of a hydrogen ion, a lithium ion, a calcium ion, and sodium ion.

The crystal structure and the cation in zeolite for use in the present disclosure can be combined without any particular limitations as long as the above-described pore size is satisfied, but, for example, in the case where zeolite whose crystal structure is the X type is used, the zeolite preferably comprises as the cation at least one selected from the group consisting of a lithium ion, a calcium ion, and a sodium ion, more preferably comprises at least one selected from the group consisting of a lithium ion and a calcium ion, and still more preferably comprises a lithium ion from the viewpoint of removing ammonia in the mixed gas sufficiently.

In addition, from the same viewpoint, in the case where zeolite whose crystal structure is the Y type is used, the zeolite preferably comprises as the cation at least one selected from the group consisting of a hydrogen ion and a sodium ion, and more preferably comprises a hydrogen ion.

Further, from the same viewpoint, in the case where zeolite whose crystal structure is the A type is used, the zeolite preferably comprises as the cation at least one selected from the group consisting of a lithium ion and a calcium ion.

(Acid)

The acid is not particularly limited as long as ammonia can be removed through an acid-base reaction between the acid and ammonia, examples thereof include sulfuric acid, hydrogen sulfates, alkali metal halides, and alkaline earth metal halides, and hydrogen sulfates are preferable from the viewpoint of ammonia adsorption equilibrium.

The hydrogen sulfate is preferably at least one selected from the group consisting of ammonium hydrogen sulfate, sodium hydrogen sulfate, potassium hydrogen sulfate, and calcium hydrogen sulfate, more preferably at least one selected from the group consisting of ammonium hydrogen sulfate and sodium hydrogen sulfate, and still more preferably ammonium hydrogen sulfate.

<Second Ammonia Removal Apparatus 2>

The ammonia removal material to be accommodated in the second ammonia removal apparatus 2 is not particularly limited as long as ammonia in the mixed gas described later can be removed, and examples thereof include: adsorbents such as zeolite, activated carbon, alumina, silica, and composite oxides; acids for removing ammonia through an acid-base reaction with ammonia; and the like. Details on these adsorbents and acids are as described above.

Among these ammonia removal materials, zeolite and the acids are preferable from the viewpoint of sufficiently reducing the ammonia concentration in the gas after being treated by the ammonia removal equipment.

<Combination of First Ammonia Removal Apparatus 1 and Second Ammonia Removal Apparatus 2>

The ammonia removal material to be accommodated in the first ammonia removal apparatus 1 (hereinafter, sometimes referred to as "first ammonia removal material") and the ammonia removal material to be accommodated in the second ammonia removal apparatus 2 (hereinafter, sometimes referred to as "second ammonia removal material") each may be of the same type or of a different type.

For example, the first ammonia removal material may be the adsorbent, and the second ammonia removal material may also be the adsorbent. Thereby, recycling of the ammonia removal materials can be facilitated further.

In this case, the first ammonia removal material may be activated carbon, and the second ammonia removal material may be zeolite. Thereby, regeneration of the first ammonia removal material (activated carbon) is easy, and ammonia in the gas can be removed by zeolite sufficiently.

Further, both the first ammonia removal material and the second ammonia removal material may be zeolite. Thereby, ammonia in the gas is removed to a low concentration by the first ammonia removal material, so that the load on the second ammonia removal material is reduced and the breakthrough time of the second ammonia removal material becomes long.

Further, the first ammonia removal material may be the adsorbent, and the second ammonia removal material may be the acid. Thereby, the first ammonia removal material can be recycled, and ammonia in the gas can be removed by the second ammonia removal material further surely.

In this case, the first ammonia removal material may be activated carbon. Thereby, regeneration of the first ammonia removal material (activated carbon) is easy.

Further, the first ammonia removal material may be zeolite. Thereby, ammonia in the gas is removed to a low concentration by the first ammonia removal material, so that the load on the second ammonia removal material is reduced and the lifetime of the acid becomes long.

<First Ammonia Concentration Measurement Apparatus 11>

The first ammonia concentration measurement apparatus 11 is not particularly limited as long as the ammonia concentration in the gas can be measured, examples thereof include a mass spectrometer, a spectrophotometer, and titration, and a spectrophotometer is preferable from the viewpoint of responsiveness.

The spectrophotometer is preferably a Fourier transform infrared spectrophotometer (FT-IR), a wavelength-scanned cavity ring-down spectroscopy (WS-CRDS) system gas analysis apparatus, or the like, and is more preferably a WS-CRDS system gas analysis apparatus.

That is, the present inventors have found that by using the WS-CRDS system gas analysis apparatus, the ammonia concentration in the gas can be measured with high accuracy in a short time, and therefore the breakthrough can be detected promptly.

However, even when the breakthrough occurs in the first ammonia removal apparatus 1, ammonia in the gas can be removed sufficiently by the second ammonia removal apparatus 2 that exists at a stage subsequent to the first ammonia removal apparatus 1. Accordingly, the first ammonia concentration measurement apparatus 11 may be an apparatus other than the WS-CRDS system gas analysis apparatus.

<Second Ammonia Concentration Measurement Apparatus 21>

The second ammonia concentration measurement apparatus 21 is not particularly limited as long as the ammonia concentration in the gas can be measured, and an apparatus of the same type as the first ammonia concentration measurement apparatus 11 can be used.

However, the WS-CRDS system gas analysis apparatus is more preferably used from the viewpoint of being capable of detecting the breakthrough in the second ammonia removal apparatus in a short time immediately after the breakthrough occurs.

It is to be noted that in the case where the second ammonia removal apparatus 2 is replaced or regenerated on a regular basis, the second ammonia concentration measurement apparatus 21 may be omitted.

<Ammonia Removal Method>

Next, one example of the method for removing ammonia using the ammonia removal equipment constituted as described above will be described.

(During Normal Operation)

The mixed gas is supplied into the first ammonia removal apparatus 1 through the pipe 3. Ammonia in the mixed gas is removed by the ammonia removal material to convert the mixed gas supplied in the first ammonia removal apparatus 1 into the first treated gas, and then the first treated gas flows out into the pipe 4.

Part of the first treated gas that has flown out into the pipe 4 flows into the first ammonia concentration measurement apparatus 11 through the pipe 12, and the ammonia concentration is measured by the first ammonia concentration measurement apparatus 11. It is to be noted that the gas after the measurement may be returned into the pipe 3, the pipe 4, or the first ammonia removal apparatus 1, or may be discharged outside the system.

In addition, the residual part of the first treated gas that has flown out into the pipe 4 is supplied into the second ammonia removal apparatus 2. Ammonia in the mixed gas is removed by the ammonia removal material to convert the first treated gas supplied in the second ammonia removal apparatus 2 into the second treated gas, and then the second treated gas flows out into the pipe 5.

Part of the second treated gas that has flown out into the pipe 5 flows into the second ammonia concentration measurement apparatus 21 through the pipe 22, and the ammonia concentration is measured by the second ammonia concentration measurement apparatus 21. It is to be noted that the gas after the measurement may be returned into the pipe 3, the pipe 4, the pipe 5, the first ammonia removal apparatus 1, or the second ammonia removal apparatus 2, or may be discharged outside the system.

In addition, the residual part of the second treated gas that has flown out into the pipe 5 is discharged outside the system as a gas having a low ammonia concentration.

(In Case Where Breakthrough Occurs in First Ammonia Removal Apparatus 1)

In the case where the value of the ammonia concentration measured by the first ammonia concentration measurement apparatus 11 exceeds a threshold value during the normal operation, the first ammonia concentration measurement apparatus 11 sends an opening/closing valve-closing signal to the opening/closing valve 3v through the lead 13 to close the opening/closing valve 3v.

In this state, the first ammonia removal apparatus 1 is detached, the first ammonia removal material is regenerated or replaced at a different place, and the first ammonia removal apparatus 1 is then attached to the original position. Thereafter, the opening/closing valve 3v is opened to restore the operation to normal operation. In addition, when a plurality of first ammonia removal apparatuses 1 are prepared in advance, a new first ammonia removal apparatus 1 can be attached promptly.

It is to be noted that the threshold value is preferably a value in a range of 0.01 to 10,000 mol ppm, more preferably a value in a range of 0.1 to 1,000 mol ppm, and still more preferably a value in a range of 1 to 100 mol ppm. In addition, the suitable value for the threshold value is the same as those in the other disclosure described later.

(In Case Where Breakthrough Occurs in Second Ammonia Removal Apparatus 2)

In the case where the value of the ammonia concentration measured by the second ammonia concentration measurement apparatus 21 exceeds a threshold value during the normal operation, the second ammonia concentration measurement apparatus 21 sends an opening/closing valve-closing signal to the opening/closing valve 4v through the lead 23 to close the opening/closing valve 4v.

In this state, the second ammonia removal apparatus 2 is detached, the second ammonia removal material is regenerated or replaced at a different place, and the second ammonia removal apparatus 2 is then attached to the original position. Thereafter, the opening/closing valve 4v is opened to restore the operation to normal operation. In addition, when a plurality of second ammonia removal apparatuses 2 are prepared in advance, a new second ammonia removal apparatus 2 can be attached promptly.

It is to be noted that the threshold value is preferably a value in a range of 0.1 mol ppm or less, more preferably a value in a range of 0.09 mol ppm or less, and still more preferably a value in a range of 0.08 mol ppm or less. In addition, the suitable value for the threshold value is the same as those in the other disclosure described later.

<Mixed Gas>

The mixed gas is not particularly limited as long as it is a gas comprising hydrogen and ammonia. For example, the mixed gas may be a mixed gas derived from a decomposition gas which is obtained by decomposing ammonia and which comprises hydrogen, nitrogen, and ammonia, or may be a gas obtained by electrolysis of water, steam reforming of a natural gas, coal, or waste plastic, or other methods. However, the mixed gas is preferably the mixed gas derived from a decomposition gas which is obtained by decomposing ammonia and which comprises hydrogen, nitrogen, and ammonia, more preferably a mixed gas comprising hydrogen, nitrogen, and ammonia each derived from a decomposition gas that is obtained by decomposing ammonia at a decomposition temperature of 450°C or higher and 600°C or lower, still more preferably a mixed gas comprising hydrogen, nitrogen, and ammonia each derived from a decomposition gas that is obtained by decomposing ammonia at a decomposition temperature of 500°C or higher and 600°C or lower, and further still more preferably a mixed gas comprising hydrogen, nitrogen, and ammonia each derived from a decomposition gas that is obtained by decomposing ammonia at a decomposition temperature of 500°C or higher and 550°C or lower.

In addition, the ammonia content in the mixed gas is preferably 100,000 mol ppm or less, more preferably 10,000 mol ppm or less, and still more preferably 1,000 mol ppm or less based on the total amount of the mixed gas.

In addition, the hydrogen content in the mixed gas is preferably 60 mol% or more, more preferably 70 mol% or more, and still more preferably 75 mol% or more based on the total amount of the mixed gas.

In addition, the nitrogen content in the mixed gas is preferably 40 mol% or less, more preferably 30 mol% or less, and still more preferably 25 mol% or less based on the total amount of the mixed gas.

Further, in the case where the mixed gas further comprises moisture ($H_2O$), the content of the moisture ($H_2O$) is preferably 5.0 mol% or less, more preferably 1.0 mol% or less, still more preferably 1,000 mol ppm or less, further still more preferably 100 mol ppm or less, further still more preferably 20 mol ppm or less, further still more preferably 10 mol ppm or less, and further still more preferably 1.0 mol ppm or less based on the total amount of the mixed gas.

The decomposition of ammonia can be represented by the following equation (a).

$$NH_3 \rightarrow (1/2)\, N_2 + (3/2)\, H_2 \qquad (a)$$

The ammonia decomposition reaction is a chemical equilibrium reaction, the higher the temperature is, the higher the conversion rate of ammonia is, and the conversion rate of ammonia reaches about 98.2 to about 99.9% under conditions of an equilibrium pressure of 0.1 MPa and 300 to 650°C (conversion rate of ammonia in chemical equilibrium state calculated using HSC Chemistry 6.0).

Accordingly, the molar ratio of nitrogen to hydrogen in a decomposition gas in which ammonia has been decomposed ($N_2/H_2$ ratio, hereinafter, also simply referred to as "$N_2/H_2$") is preferably in a range of $N_2/H_2$ = 1.0/2.5 to 1.0/3.5, more preferably in a range of 1.0/2.8 to 1.0/3.2, still more preferably in a range of 1.0/2.9 to 1.0/3.1, and further still more preferably 1.0/3.0.

In addition, the suitable compositions (molar fractions) of respective components in the mixed gas including the moisture content are as described above, and, for example, a mixed gas derived from a decomposition gas in which ammonia has been decomposed by an ammonia decomposition method other than an autothermal system, where ammonia and oxygen react to produce water (steam), is preferably used in order to satisfy the suitable compositions.

For example, in the case where ammonia is decomposed by the autothermal system, the moisture content in the mixed gas is increased, and therefore when the ammonia removal material is an adsorbent, there is a risk that the adsorbent adsorbs the moisture and the amount of ammonia which the ammonia removal material can remove from the mixed gas is reduced. Moreover, the amount of hydrogen which is obtained by decomposing the same amount of an ammonia raw material is reduced. As a result, for example, in the case where the autothermal system is used for a method for producing a hydrogen gas for a fuel cell (particularly, solid polymer fuel cell comprising proton exchange membrane) for which high-purity hydrogen is required as described later, it becomes necessary to decompose a larger amount of ammonia, and the lifetime of the ammonia decomposition material is deteriorated due to the presence of moisture in the mixed gas. Accordingly, ammonia is preferably decomposed by an ammonia decomposition method other than the autothermal system.

Further, to obtain the mixed gas which is obtained by decomposing ammonia and which comprises hydrogen, nitrogen, and ammonia, a catalyst for accelerating the ammonia decomposition reaction represented by the equation (a) is preferably added. The catalyst is not particularly limited as long as it has catalytic activity to the ammonia decomposition reaction represented by the equation (a) and exhibits the effects of the present invention, and examples thereof include catalysts comprising as a composition a non-noble metal series transition metal (such as iron, cobalt, nickel, or molybdenum), any of rare earth series (such as lanthanum, cerium, or neodymium), or any of noble metal series (such as ruthenium, rhodium, iridium, palladium, or platinum). The non-noble metal series transition metals can be used as a single metal, an alloy, a nitride, a carbide, an oxide, and a composite oxide, the rare earth series can be used as an oxide, and both the non-noble metal series transition metals and the rare earth series can be used by being carried on a carrier having a high specific surface area, such as alumina, silica, magnesia, zirconia, or titania. In addition, the noble metal series can also be used by being carried on a carrier having a high specific surface area, such as alumina, silica, magnesia, zirconia, or titania. Further, a small amount of the noble metal series can be contained and used in the transition metal series and/or the rare earth series. These catalysts can be used singly, or two or more thereof may be used together.

In the case where the mixed gas derived from a decomposition gas in which ammonia has been decomposed is used as the mixed gas, the temperature condition of the ammonia decomposition reaction is preferably 300°C or higher and 800°C or lower. The temperature condition in the ammonia decomposition reaction is more preferably 500°C or higher and 600°C or lower, still more preferably 500°C or higher and 550°C or lower from the viewpoint of making it possible to use even a stainless steel (SUS) material having a heatproof temperature of 600°C or lower as a material for the equipment (such as a container and a pipe) that is used for the ammonia decomposition reaction.

In addition, the pressure condition during the ammonia decomposition reaction is preferably 0.01 to 1.0 MPa (abs), more preferably 0.05 to 0.75 MPa (abs), and still more preferably 0.1 to 0.5 MPa (abs).

Further, in the case where ammonia is decomposed under a condition of 500°C or higher and 600°C or lower, to achieve a high conversion rate of ammonia, a catalyst comprising at least one selected from the group consisting of nickel, ruthenium, and rhodium is preferably used among the examples of the catalyst that can be used for the ammonia decomposition, and a catalyst comprising ruthenium (ruthenium-based catalyst) is more preferably used. In the case where the ruthenium-based catalyst is used, the conversion rate of ammonia at which the decomposition reaction is in an equilibrium state is easily achieved even under a condition of a decomposition temperature of 550°C or lower.

<First Treated Gas>

The ammonia concentration in the first treated gas is preferably 10,000 mol ppm or less, more preferably 1,000 mol ppm or less, and still more preferably 100 mol ppm or less.

<Second Treated Gas>

The ammonia concentration in the second treated gas is preferably 10 mol ppm or less, more preferably 1 mol ppm or less, and still more preferably 0 mol ppm.

<Modifications>

In the above-described disclosure, the first ammonia removal apparatus 1 and the second ammonia removal apparatus 2 are made to be detachable from the pipe 3, 4, 5; however, either one or both of them may be made to be undetachable. In that case, ammonia in the ammonia removal material is preferably removed by allowing a heated nitrogen gas or the like to flow into the apparatus 1 or 2 without detaching the apparatus 1 or 2.

The second ammonia removal apparatus 2 may have a capacity such that the breakthrough does not occur during a continuous operation period. In this case, by replacing or regenerating the ammonia removal material in the second ammonia removal apparatus 2 during the periodic maintenance after the continuous operation, a gas in which ammonia has been removed surely can be obtained. It is to be noted that in this case, the equipment can be made simpler by omitting the second ammonia concentration measurement apparatus 21, or the ammonia concentration in the gas that flows out of the second ammonia removal apparatus 2 can be checked by not omitting the second ammonia concentration measurement apparatus 21.

The opening/closing valve 3v, 4v is connected to the ammonia concentration measurement apparatus 11, 21 by the lead 13, 23, but may be wirelessly connected.

In addition, the ammonia concentration measurement apparatus 11, 21 may be constituted so as not to send an opening-closing signal to the opening/closing valve 3v, 4v. In this case, the opening/closing valve 3v, 4v may be closed by human power when the measured value measured by the ammonia concentration measurement apparatus 11, 21 exceeds a threshold value.

In the present disclosure, the first ammonia removal apparatus 1 and the second ammonia removal apparatus 2 are installed in series; however, one or a plurality of ammonia removal apparatuses may be installed in series or in parallel between these apparatuses 1, 2. In that case, for a part or the whole of the one or the plurality of the ammonia removal apparatuses, ammonia concentration measurement apparatuses for measuring the ammonia concentration in the gas that has flown out of the corresponding ammonia removal apparatus may be installed. However, it is preferable not to provide an additional ammonia removal apparatus between the first ammonia removal apparatus 1 and the second ammonia removal apparatus 2 from the viewpoint of simplification of apparatus and operation.

One or a plurality of ammonia removal apparatuses may further be connected directly to the second ammonia removal apparatus 2, at stage(s) subsequent to the second ammonia removal apparatus 2. For example, a third ammonia removal apparatus may be connected to the second ammonia removal apparatus 2, at the stage subsequent to the second ammonia removal apparatus 2 through a pipe, a fourth ammonia removal apparatus may be connected to the third ammonia removal apparatus, at the stage subsequent to the third ammonia removal apparatus through a pipe, or one or a plurality of ammonia removal apparatuses may further be connected to the fourth ammonia removal apparatus, at the stage(s) subsequent to the fourth ammonia removal apparatus through a pipe or pipes.

It is to be noted that in the embodiments described later, modifications may also be made in the same manner as in these modifications.

<Overall Structure of Ammonia Removal Equipment>

Fig. 2 shows a schematic diagram illustrating the ammonia removal equipment according to the present disclosure, not according to the present invention.

The ammonia removal equipment comprises: a first ammonia removal apparatus 1; a second ammonia removal apparatus 2 that is installed at a stage subsequent to the first ammonia removal apparatus 1 and that treats a first treated gas treated by the first ammonia removal apparatus 1; and a first ammonia concentration measurement apparatus 31 that is capable of measuring an ammonia concentration in the first treated gas treated by the first ammonia removal apparatus 1 and an ammonia concentration in the second treated gas treated by the second ammonia removal apparatus 2.

A pipe 3 provided with an opening/closing valve 3v is connected to an inflow port of the first ammonia removal apparatus 1. An outflow port of the first ammonia removal apparatus 1 and an inflow port of the second ammonia removal apparatus 2 are connected by a pipe 4 provided with an opening/closing valve 4v. A pipe 5 is connected to an outflow port of the second ammonia removal apparatus 2.

The first ammonia concentration measurement apparatus 31 and the pipe 4 are connected through a first lead-in pipe 12 branching from the pipe 4. The pipe 12 is provided with an opening/closing valve 12v. The first ammonia concentration measurement apparatus 31 and the opening/closing valve 3v are connected through a lead 13. The first ammonia concentration measurement apparatus 31 is made to be capable of closing the opening/closing valve 3v by sending an opening/closing valve-closing signal to the opening/closing valve 3v through the lead 13 in the case where the measured value of the ammonia concentration in the gas introduced through the pipe 12 exceeds a threshold value.

In addition, the first ammonia concentration measurement apparatus 31 and the pipe 5 are connected through a second lead-in pipe 22 branching from the pipe 5. The pipe 22 is provided with an opening/closing valve 22v. The first ammonia concentration measurement apparatus 31 and the opening/closing valve 4v are connected through a lead 23. The first ammonia concentration measurement apparatus 31 is made to be capable of closing the opening/closing valve 4v by sending an opening/closing valve-closing signal to the opening/closing valve 4v through the lead 23 in the case where the measured value of the ammonia concentration in the gas introduced through the pipe 22 exceeds a threshold value.

A switching apparatus for the measurement apparatus is constituted from the opening/closing valves 12v and 22v. The switching apparatus is made to be switchable according to the signal from the ammonia concentration measurement apparatus 31. Thereby, the ammonia concentration of the gas that is introduced from the pipe 12 and of the gas that is introduced from the pipe 22 can be measured by one ammonia concentration measurement apparatus 31.

The other components of the ammonia removal equipment are the same as those in the ammonia removal equipment according to the present disclosure refering to Fig. 1 and details on respective apparatuses are also as described above.

<Ammonia Removal Method>

Next, one example of the method for removing ammonia using the ammonia removal equipment constituted as described above will be described.

(During Normal Operation)

The mixed gas is supplied into the first ammonia removal apparatus 1 through the pipe 3. Ammonia in the mixed gas is removed by the ammonia removal material to convert the mixed gas supplied in the first ammonia removal apparatus 1 into the first treated gas, and then the first treated gas flows out into the pipe 4.

Part of the first treated gas that has flown out into the pipe 4 flows into the first ammonia concentration measurement apparatus 31 through the pipe 12, and the ammonia concentration is measured by the first ammonia concentration measurement apparatus 31. It is to be noted that the gas after the measurement may be returned into the pipe 3, the pipe 4, or the first ammonia removal apparatus 1, or may be discharged outside the system.

In addition, the residual part of the first treated gas that has flown out into the pipe 4 is supplied into the second ammonia removal apparatus 2. Ammonia in the mixed gas is removed by the ammonia removal material to convert the first treated gas supplied in the second ammonia removal apparatus 2 into the second treated gas, and then the second treated gas flows out into the pipe 5.

Part of the second treated gas that has flown out into the pipe 5 flows into the first ammonia concentration measurement apparatus 31 through the pipe 22, and the ammonia concentration is measured by the first ammonia concentration measurement apparatus 31. It is to be noted that the gas after the measurement is discharged outside the system.

In addition, the residual part of the second treated gas that has flown out into the pipe 5 is discharged outside the system as a gas having a low ammonia concentration.

(In Case Where Breakthrough Occurs in First Ammonia Removal Apparatus 1)

In the case where the value of the ammonia concentration in the first treated gas measured by the first ammonia concentration measurement apparatus 31 exceeds a threshold value during the normal operation, the first ammonia concentration measurement apparatus 31 sends an opening/closing valve-closing signal to the opening/closing valve 3v through the lead 13. The opening/closing valve 3v that has received the opening/closing valve-closing signal closes the opening/closing valve 3v.

In this state, the first ammonia removal apparatus 1 is detached, the first ammonia removal material is regenerated or replaced at a different place, and the first ammonia removal apparatus 1 is then attached to the original position. Thereafter, the opening/closing valve 3v is opened to restore the operation to normal operation. In addition, when a plurality of first ammonia removal apparatuses 1 are prepared in advance, a new first ammonia removal apparatus 1 can be attached promptly.

(In Case Where Breakthrough Occurs in Second Ammonia Removal Apparatus 2)

In the case where the value of the ammonia concentration in the second treated gas measured by the first ammonia concentration measurement apparatus 31 exceeds a threshold value during the normal operation, the first ammonia concentration measurement apparatus 31 sends an opening/closing valve-closing signal to the opening/closing valve 4v through the lead 23. The opening/closing valve 4v that has received the opening/closing valve-closing signal closes the opening/closing valve 4v.

In this state, the second ammonia removal apparatus 2 is detached, the second ammonia removal material is regenerated or replaced at a different place, and the second ammonia removal apparatus 2 is then attached to the original position. Thereafter, the opening/closing valve 4v is opened to restore the operation to normal operation. In addition, when a plurality of second ammonia removal apparatuses 2 are prepared in advance, a new second ammonia removal apparatus 2 can be attached promptly.

[First Embodiment]

<Overall Structure of Ammonia Removal Equipment>

Fig. 3 shows a schematic diagram illustrating the ammonia removal equipment according to the first embodiment.

The ammonia removal equipment is the same as the ammonia removal equipment according to Fig. 1 except that a first ammonia removal apparatus 1A comprising a plurality of (two in the present embodiment) first ammonia removal containers 1a, 1b installed in parallel and a three-way valve 3e are used in place of the first ammonia removal apparatus 1 and the opening/closing valve 3v in the ammonia removal equipment according to Fig. 1.

In addition, the reference signs that are the same as those in the ammonia removal equipment according to Fig 1 denote the same parts as those in the ammonia removal equipment according to Fig 1.

Specifically, the first ammonia removal apparatus 1A comprises: two first ammonia removal containers 1a, 1b installed in parallel; two pipes 3a, 3b into which the pipe 3 branches from the rear edge thereof and which are connected to inflow ports of the two first ammonia removal containers 1a, 1b, respectively; and two pipes 3c, 3d into which the pipe 4 branches from the front edge thereof and which are connected to outflow ports of the two first ammonia removal containers 1a, 1b, respectively. In addition, the three-way valve 3e is installed at a merging portion of the pipes 3, 3a, 3b.

The first ammonia concentration measurement apparatus 11 and the three-way valve 3e are connected through the lead 13. The first ammonia concentration measurement apparatus 11 is made to be capable of sending a three-way valve-switching signal to the three-way valve 3e through the lead 13 in the case where the measured value of the ammonia concentration exceeds a threshold value.

It is to be noted that the first ammonia removal containers 1a, 1b are made to be detachable.

The other components are the same as those in the ammonia removal equipment according to Fig. 1, and therefore the description is omitted.

<Ammonia Removal Method>

Next, one example of the method for removing ammonia using the ammonia removal equipment constituted as described above will be described.

(During Normal Operation: During Operation with First Ammonia Removal Container 1a)

The mixed gas is supplied into the pipe 3. The mixed gas in the pipe 3 is supplied into the first ammonia removal container 1a through the pipe 3a by the three-way valve 3e. Ammonia in the mixed gas is removed by the ammonia removal material to convert the mixed gas supplied in the first ammonia removal container 1a into the first treated gas, and then the first treated gas flows out into the pipe 4 through the pipe 3c.

Part of the first treated gas that has flown out into the pipe 4 flows into the first ammonia concentration measurement apparatus 11 through the pipe 12, and the ammonia concentration is measured by the first ammonia concentration measurement apparatus 11. It is to be noted that the gas after the measurement may be returned into the pipe 4, may be returned on the upstream side of the pipe 4, or may be discharged outside the system.

In addition, the residual part of the first treated gas that has flown out into the pipe 4 is supplied into the second ammonia removal apparatus 2. Ammonia in the mixed gas is removed by the ammonia removal material to convert the first treated gas supplied in the second ammonia removal apparatus 2 into the second treated gas, and then the second treated gas flows out into the pipe 5.

Part of the second treated gas that has flown out into the pipe 5 flows into the second ammonia concentration measurement apparatus 21 through the pipe 22, and the ammonia concentration is measured by the second ammonia concentration measurement apparatus 21. It is to be noted that the gas after the measurement is discharged outside the system.

(In Case Where Breakthrough Occurs in First Ammonia Removal Container 1a)

In the case where the value of the ammonia concentration measured by the first ammonia concentration measurement apparatus 11 exceeds a threshold value during the normal operation, the first ammonia concentration measurement apparatus 11 sends a valve-switching signal to the three-way valve 3e through the lead 13. The three-way valve 3e that has received the valve-switching signal switches the destination of the mixed gas to the first ammonia removal container 1b.

Thereby, the mixed gas is treated by the first ammonia removal container 1b in place of the first ammonia removal container 1a.

In addition, in a state where the first ammonia removal container 1a is switched to the first ammonia removal container 1b, the first ammonia removal container 1a is detached, the first ammonia removal material is regenerated or replaced at a different place, and the first ammonia removal container 1a is then attached to the original position to wait until next operation.

(In Case Where Breakthrough Occurs in First Ammonia Removal Container 1b)

In the case where the value of the ammonia concentration measured by the first ammonia concentration measurement apparatus 11 exceeds a threshold value during the normal operation, the first ammonia concentration measurement apparatus 11 sends a valve-switching signal to the three-way valve 3e through the lead 13. The three-way valve 3e that has received the valve-switching signal switches the destination of the mixed gas to the first ammonia removal container 1a.

Thereby, the mixed gas is treated by the first ammonia removal container 1a in place of the first ammonia removal container 1b.

In addition, the first ammonia removal container 1b is detached, the first ammonia removal material is regenerated or replaced at a different place, and the first ammonia removal container 1b is then attached to the original position to wait until next operation.

(In Case Where Breakthrough Occurs in Second Ammonia Removal Apparatus 2)

Description is the same as in the case of Fig. 1.

(Others)

It is to be noted that in the embodiment, the first ammonia removal containers 1a, 1b are made to be detachable.

In addition, the first ammonia removal apparatus 1A may comprise three or more ammonia removal containers installed in parallel, but preferably comprises two ammonia removal containers from the viewpoint of simplification of equipment and operation.

[Second Embodiment]

<Overall Structure of Ammonia Removal Equipment>

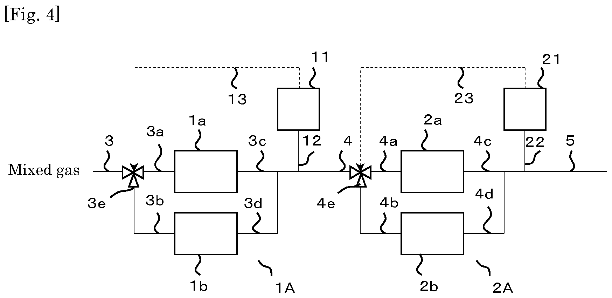

Fig. 4 shows a schematic diagram illustrating the ammonia removal equipment according to the second embodiment.

The ammonia removal equipment is the same as the ammonia removal equipment according to the first embodiment except that a second ammonia removal apparatus 2A comprising a plurality of (two in the present embodiment) second ammonia removal containers 2a, 2b installed in parallel and a three-way valve 4e are used in place of the second ammonia removal apparatus 2 and the opening/closing valve 4v in the ammonia removal equipment according to the first embodiment.

In addition, the reference signs that are the same as those in the ammonia removal equipment according to the first embodiment denote the same parts as those in the ammonia removal apparatus according to the first embodiment.

Specifically, the second ammonia removal apparatus 2A comprises:

two second ammonia removal containers 2a, 2b installed in parallel;
two pipes 4a, 4b into which the pipe 4 branches from the rear edge thereof and which are connected to inflow ports of the two second ammonia removal containers 2a, 2b, respectively; and
two pipes 4c, 4d into which the pipe 5 branches from the front edge thereof and which are connected to outflow ports of the two second ammonia removal containers 2a, 2b, respectively. In addition, the three-way valve 4e is installed at a merging portion of the pipes 4, 4a, 4b.

The second ammonia concentration measurement apparatus 21 and the three-way valve 4e are connected through the lead 23. The second ammonia concentration measurement apparatus 21 is made to be capable of sending a three-way valve-switching signal to the three-way valve 4e through the lead 23 in the case where the measured value of the ammonia concentration exceeds a threshold value.

It is to be noted that the second ammonia removal containers 2a, 2b are made to be detachable.

The other components are the same as those in the ammonia removal equipment according to the first embodiment, and therefore the description is omitted.

<Ammonia Removal Method>

Next, one example of the method for removing ammonia using the ammonia removal equipment constituted as described above will be described.

(During Normal Operation: During Operation with Ammonia Removal Containers 1a, 2a)

The mixed gas is supplied into the pipe 3. The mixed gas in the pipe 3 is supplied into the first ammonia removal container 1a through the pipe 3a by the three-way valve 3e. Ammonia in the mixed gas is removed by the ammonia removal material to convert the mixed gas supplied in the first ammonia removal container 1a into the first treated gas, and then the first treated gas flows out into the pipe 4 through the pipe 3c.

Part of the first treated gas that has flown out into the pipe 4 flows into the first ammonia concentration measurement apparatus 11 through the pipe 12, and the ammonia concentration is measured by the first ammonia concentration measurement apparatus 11. It is to be noted that the gas after the measurement may be returned into the pipe 4, may be returned on the upstream side of the pipe 4, or may be discharged outside the system.

In addition, the residual part of the first treated gas that has flown out into the pipe 4 is supplied into the second ammonia removal container 2a through the pipe 4a by the three-way valve 4e. Ammonia in the mixed gas is removed by the ammonia removal material to convert the mixed gas supplied in the second ammonia removal container 2a into the second treated gas, and then the second treated gas flows out into the pipe 5 through the pipe 4c.

Part of the first treated gas that has flown out into the pipe 5 flows into the second ammonia concentration measurement apparatus 21 through the pipe 22, and the ammonia concentration is measured by the second ammonia concentration measurement apparatus 21. It is to be noted that the gas after the measurement is discharged outside the system.

(In Case Where Breakthrough Occurs in First Ammonia Removal Container 1a)

Description is the same as in the case of the first embodiment.

(In Case Where Breakthrough Occurs in First Ammonia Removal Container 1b)

Description is the same as in the case of the first embodiment.

(In Case Where Breakthrough Occurs in Second Ammonia Removal Container 2a)

In the case where the value of the ammonia concentration measured by the second ammonia concentration measurement apparatus 21 exceeds a threshold value during the normal operation, the second ammonia concentration measurement apparatus 21 sends a valve-switching signal to the three-way valve 4e through the lead 23. The three-way valve 4e that has received the valve-switching signal switches the destination of the mixed gas to the second ammonia removal container 2b.

In this state, the second ammonia removal container 2a is detached, the second ammonia removal material is regenerated or replaced at a different place, and the second ammonia removal container 2a is then attached to the original position to wait until next operation.

(In Case Where Breakthrough Occurs in Second Ammonia Removal Container 2b)

In the case where the value of the ammonia concentration measured by the second ammonia concentration measurement apparatus 21 exceeds a threshold value during the normal operation, the second ammonia concentration measurement apparatus 21 sends a valve-switching signal to the three-way valve 4e through the lead 23. The three-way valve 4e that has received the valve-switching signal switches the destination of the mixed gas to the second ammonia removal container 2a.

In this state, the second ammonia removal container 2b is detached, the second ammonia removal material is regenerated or replaced at a different place, and the second ammonia removal container 2b is then attached to the original position to wait until next operation.

(Others)

It is to be noted that in the embodiment, the second ammonia removal containers 2a, 2b are made to be detachable; however, either one or both of them may be made to be undetachable.

In addition, each of the first ammonia removal apparatus 1A and the second ammonia removal apparatus 2A may comprise three or more ammonia removal containers installed in parallel, but preferably comprises two ammonia removal containers from the viewpoint of simplification of equipment and operation.

Further, in the second embodiment, the first ammonia removal apparatus 1 and the opening/closing valve 3v such as those described in Fig. 1 may be used in place of the first ammonia removal apparatus 1A and the three-way valve 3e.

[Application of Ammonia Removal Equipment and Ammonia Removal Method]

As described above, since a gas having a low ammonia concentration can be obtained from the mixed gas, the ammonia removal equipment according to the present invention and the ammonia removal method according to the present invention can be used suitably as ammonia removal equipment and an ammonia removal method for use in a method for producing a hydrogen gas for a fuel cell (particularly, solid polymer fuel cell comprising proton exchange membrane) for which high-purity hydrogen is required. The ammonia removal equipment according to the present invention and the ammonia removal method according to the present invention can be used more suitably as ammonia removal equipment and an ammonia removal method particularly for a method for producing a hydrogen gas for a fuel cell automobile for which high-purity hydrogen is required. In addition, the ammonia removal equipment according to the present invention and the ammonia removal method according to the present invention may be used for ships and railroads in which fuel cells are used.

It is to be noted that the term "fuel cell automobile" hereinafter includes vehicles that can run on public roads (including all vehicles such as private vehicles, business-use vehicles such as buses and taxis, four-wheeled vehicles, and two-wheeled vehicles) and industrial vehicles such as a fork lift truck.

[Method for Producing Hydrogen Gas for Fuel Cell Automobile]

The method for producing a hydrogen gas for a fuel cell automobile according to the present invention is a method for producing a hydrogen gas for a fuel cell automobile, the method comprising a step of using the above-described ammonia removal equipment according to the present invention to remove ammonia in the mixed gas.

The method for producing a hydrogen gas for a fuel cell automobile according to the present invention may be a method for producing a hydrogen gas for a fuel cell automobile, the method comprising a hydrogen purification step for removing impurities such as nitrogen after the above-described ammonia removal method according to the present invention, or may be a method for producing a hydrogen gas for a fuel cell automobile, the method comprising a mixed gas purification step for removing impurities such as nitrogen before the above-described ammonia removal method according to the present invention. Moreover, the method for producing a hydrogen gas for a fuel cell automobile according to the present invention may be a method for producing a hydrogen gas for a fuel cell automobile, the method comprising a mixed gas purification step for removing impurities such as nitrogen before the above-described ammonia removal method according to the present invention and further comprising a hydrogen purification step for removing impurities such as nitrogen after the above-described ammonia removal method according to the present invention.

By using the ammonia removal method, high-purity hydrogen having a low ammonia content or high-purity hydrogen not containing ammonia can be produced. It is to be noted that suitable aspects of the ammonia removal method for use in the method for producing a hydrogen gas for a fuel cell automobile according to the present invention are similar to suitable aspects of the ammonia removal equipment according to the present invention and are as described above.

<Hydrogen Purification Step>

The hydrogen purification step is not particularly limited as long as it is a step comprising a method by which hydrogen that can be used as a hydrogen gas for a fuel cell automobile can be supplied; however, the hydrogen purification step is preferably a step, for example, by which a hydrogen gas for a fuel cell automobile, the hydrogen gas satisfying a hydrogen gas composition as specified in the international standard ISO 14687-2, is obtained.

Examples of the method of purifying hydrogen include general purification methods such as a pressure swing method (PSA method) in which a gas to be treated is introduced into a container or the like in which a substance that selectively adsorbs a particular component from a gas, such as zeolite (the type of zeolite is not particularly limited) or activated carbon, is filled, and separation is performed by increasing/decreasing pressure, a temperature swing method (TSA method) in which the separation is performed by increasing/decreasing temperature, and a pressure/temperature swing method in which the pressure and the temperature are swung. Moreover, examples of the method of purifying hydrogen also include a method in which the pressure is increased by a compressor or the like, nitrogen in a gas is then liquefied under an extremely low temperature by a gas-liquid separator to perform gas-liquid separation of nitrogen from hydrogen, and the separated hydrogen gas is allowed to pass through an adsorption/purification column, thereby removing residual nitrogen, and a palladium permeable membrane method.

<Mixed Gas Purification Step>

The mixed gas purification step is not particularly limited as long as it is a method which is other than the ammonia removal method and by which impurities such as nitrogen can be removed from the mixed gas, and, for example, the methods which are similar to those described in the hydrogen purification step can be used.

<Application of Hydrogen Gas>

In addition, the hydrogen gas that is obtained by the method for producing a hydrogen gas for a fuel cell automobile according to the present invention can be used suitably as a hydrogen gas for a fuel cell automobile for which high-purity hydrogen is required as described in the application of the ammonia removal equipment and the ammonia removal method.

Reference Signs List

1, 1A First ammonia removal apparatus
2, 2A Second ammonia removal apparatus
1a, 1b First ammonia removal container
2a, 2b Second ammonia removal container
11 First ammonia concentration measurement apparatus
21 Second ammonia concentration measurement apparatus

**Claims**

1. Ammonia removal equipment comprising:

    a first ammonia removal apparatus that accommodates an ammonia removal material and removes ammonia in a mixed gas comprising hydrogen and ammonia;
    a second ammonia removal apparatus that is installed at a stage subsequent to the first ammonia removal apparatus and that treats a first treated gas treated by the first ammonia removal apparatus; and
    a first ammonia concentration measurement apparatus that measures an ammonia concentration in the first treated gas treated by the first ammonia removal apparatus,
    wherein the first ammonia removal apparatus comprises:

        a plurality of detachably attachable first ammonia removal containers installed in parallel; and
        a first switching apparatus that is capable of supplying the mixed gas into a part or the whole of the plurality of first ammonia removal containers.

2. The ammonia removal equipment according to claim 1, wherein the second ammonia removal apparatus comprises:

    a plurality of detachably attachable second ammonia removal containers installed in parallel; and
    a second switching apparatus that is capable of supplying the mixed gas into a part or the whole of the plurality of second ammonia removal containers.

3. The ammonia removal equipment according to claim 1 or 2, wherein the first ammonia concentration measurement apparatus is a wavelength-scanned cavity ring-down spectroscopy (WS-CRDS) system gas analysis apparatus.

4. The ammonia removal equipment according to any one of claims 1 to 3, comprising:

    a first lead-in pipe that leads the first treated gas treated by the first ammonia removal apparatus into the first ammonia concentration measurement apparatus;
    a second lead-in pipe that leads a second treated gas treated by the second ammonia removal apparatus into the first ammonia concentration measurement apparatus; and
    a switching apparatus that is for a measurement apparatus and that switches between operation of communicating the first lead-in pipe with the first ammonia concentration measurement apparatus and operation of communicating the second lead-in pipe with the first ammonia concentration measurement apparatus.

5. The ammonia removal equipment according to any one of claims 1 to 3, comprising a second ammonia concentration measurement apparatus that measures an ammonia concentration in a second treated gas treated by the second ammonia removal apparatus.

6. The ammonia removal equipment according to claim 5, wherein the second ammonia concentration measurement apparatus is a wavelength-scanned cavity ring-down spectroscopy (WS-CRDS) system gas analysis apparatus.

7. The ammonia removal equipment according to any one of claims 1 to 6, wherein the first ammonia removal apparatus comprises zeolite accommodated therein.

8. The ammonia removal equipment according to any one of claims 1 to 7, wherein the second ammonia removal apparatus comprises an acid accommodated therein.

9. An ammonia removal method comprising using the ammonia removal equipment according to any one of claims 1 to 8 to treat the mixed gas.

10. The ammonia removal method according to claim 9, wherein the first ammonia removal apparatus is regenerated or replaced after breakthrough occurs in the first ammonia removal apparatus.

11. The ammonia removal method according to claim 9 or 10, wherein the second ammonia removal apparatus is regenerated or replaced before breakthrough occurs in the second ammonia apparatus.

12. A hydrogen gas production method comprising a step of using the ammonia removal equipment according to any one of claims 1 to 8 to remove ammonia in the mixed gas.

**Patentansprüche**

1. Ammoniakentfernungsausrüstung, umfassend:

   eine erste Ammoniakentfernungsvorrichtung, die ein Ammoniakentfernungsmaterial aufnimmt und Ammoniak in einem Wasserstoff und Ammoniak enthaltenden Mischgas entfernt; eine zweite Ammoniakentfernungsvorrichtung, die auf einer Stufe nach der ersten Ammoniakentfernungsvorrichtung installiert ist und die ein erstes, von der ersten Ammoniakentfernungsvorrichtung behandeltes Gas behandelt; und eine erste Ammoniakkonzentrationsmessungsvorrichtung, die eine Ammoniakkonzentration in dem ersten behandelten Gas, das von der ersten Ammoniakentfernungsvorrichtung behandelt wurde, misst, wobei die erste Ammoniakentfernungsvorrichtung umfasst:

   eine Vielzahl von abnehmbar angebrachten ersten Ammoniakentfernungsbehältern, die parallel installiert sind; und eine erste Schaltvorrichtung, die in der Lage ist, das Mischgas in einen Teil oder in die Gesamtheit der mehreren ersten Ammoniakentnahmebehälter zu leiten.

2. Ammoniakentfernungsausrüstung nach Anspruch 1, wobei die zweite Ammoniakentfernungsvorrichtung umfasst:

   eine Vielzahl von abnehmbar angebrachten zweiten Ammoniakentfernungsbehältern, die parallel installiert sind; und ein zweites Schaltgerät, das in der Lage ist, das Mischgas in einen Teil oder in die Gesamtheit der mehreren zweiten Ammoniakentnahmebehälter zu leiten.

3. Ammoniakentfernungsausrüstung nach Anspruch 1 oder 2, wobei die erste Ammoniakkonzentrationsmessungsvorrichtung ein Gasanalysegerät mit Wellenlängenabtastung und Cavity-Ring-Down-Spektroskopie (WS-CRDS) ist.

4. Ammoniakentfernungsausrüstung nach einem der Ansprüche 1 bis 3, umfassend:

ein erstes Zuführungsrohr, das das erste behandelte Gas, das von der ersten Ammoniakentfernungsvorrichtung behandelt wurde, in die erste Ammoniakkonzentrationsmessvorrichtung leitet; ein zweites Zuführungsrohr, das ein zweites, durch die zweite Ammoniakentfernungsvorrichtung behandeltes Gas in die erste Ammoniakkonzentrationsmessvorrichtung leitet; und eine Schaltvorrichtung für eine Messvorrichtung, die zwischen dem Betrieb der Verbindung des ersten Zuführungsrohrs mit der ersten Ammoniakkonzentrationsmessvorrichtung und dem Betrieb der Verbindung des zweiten Zuführungsrohrs mit der ersten Ammoniakkonzentrationsmessvorrichtung umschaltet.

5. Ammoniakentfernungsausrüstung nach einem der Ansprüche 1 bis 3, umfassend eine zweite Ammoniakkonzentrationsmessvorrichtung, die eine Ammoniakkonzentration in einem zweiten behandelten Gas misst, das von der zweiten Ammoniakentfernungsvorrichtung behandelt wurde.

6. Ammoniakentfernungsausrüstung nach Anspruch 5, wobei die zweite Ammoniakkonzentrationsmessvorrichtung ein Gasanalysegerät mit Wellenlängenabtastung und Cavity-Ring-Down-Spektroskopie (WS-CRDS) ist.

7. Ammoniakentfernungsausrüstung nach einem der Ansprüche 1 bis 6, wobei die erste Ammoniakentfernungsvorrichtung einen darin aufgenommenen Zeolith umfasst.

8. Ammoniakentfernungsausrüstung nach einem der Ansprüche 1 bis 7, wobei die zweite Ammoniakentfernungsvorrichtung eine darin aufgenommene Säure umfasst.

9. Ammoniakentfernungsverfahren, bei dem die Ammoniakentfernungsausrüstung nach einem der Ansprüche 1 bis 8 zur Behandlung des Mischgases verwendet wird.

10. Ammoniakentfernungsverfahren nach Anspruch 9, wobei die erste Ammoniakentfernungsvorrichtung regeneriert oder ersetzt wird, nachdem ein Durchbruch in der ersten Ammoniakentfernungsvorrichtung aufgetreten ist.

11. Ammoniakentfernungsverfahren nach Anspruch 9 oder 10, wobei die zweite Ammoniakentfernungsvorrichtung regeneriert oder ersetzt wird, bevor ein Durchbruch in der zweiten Ammoniakvorrichtung auftritt.

12. Wasserstoffgasherstellungsverfahren, bei dem die Ammoniakentfernungsausrüstung nach einem der Ansprüche 1 bis 8 verwendet wird, um Ammoniak im Mischgas zu entfernen.

**Revendications**

1. Équipement d'élimination d'ammoniac comprenant :

   un premier appareil d'élimination d'ammoniac qui loge un matériau d'élimination d'ammoniac et élimine l'ammoniac dans un gaz mixte comprenant de l'hydrogène et de l'ammoniac ;
   un second appareil d'élimination d'ammoniac qui est installé au niveau d'un étage suivant du premier appareil d'élimination d'ammoniac et qui traite un premier gaz traité, traité par le premier appareil d'élimination d'ammoniac ; et
   un premier appareil de mesure de concentration d'ammoniac qui mesure une concentration d'ammoniac dans le premier gaz traité, traité par le premier appareil d'élimination d'ammoniac, dans lequel le premier appareil d'élimination d'ammoniac comprend :

      une pluralité de premiers récipients d'élimination d'ammoniac pouvant être fixés de manière amovible, installés en parallèle ; et
      un premier appareil de commutation qui est capable de fournir le gaz mixte dans une partie ou la totalité de la pluralité de premiers récipients d'élimination d'ammoniac.

2. Équipement d'élimination d'ammoniac selon la revendication 1, dans lequel le second appareil d'élimination d'ammoniac comprend :

      une pluralité de seconds récipients d'élimination d'ammoniac pouvant être fixés de manière amovible, installés en parallèle ; et
      un second appareil de commutation qui est capable de fournir le gaz mixte dans une partie ou la totalité de la pluralité de seconds récipients d'élimination d'ammoniac.

3. Équipement d'élimination d'ammoniac selon la revendication 1 ou 2, dans lequel le premier appareil de mesure de concentration d'ammoniac est un appareil d'analyse de gaz de système de spectroscopie à cavité optique à balayage en longueur d'onde (WS-CRDS).

4. Équipement d'élimination d'ammoniac selon l'une quelconque des revendications 1 à 3, comprenant :

      un premier tuyau d'entrée qui conduit le premier gaz traité, traité par le premier appareil d'élimination d'ammoniac dans le premier appareil de mesure de concentration d'ammoniac ;
      un second tuyau d'entrée qui conduit un second gaz traité, traité par le second appareil d'élimination d'ammoniac dans le premier appareil de mesure de concentration d'ammoniac ; et
      un appareil de commutation qui est destiné à un appareil de mesure et qui commute entre le fonctionnement de communication du premier tuyau d'entrée avec le premier appareil de mesure de concentration d'ammoniac et le fonctionnement de communication du second tuyau d'entrée avec le premier appareil de mesure de concentration d'ammoniac.

5. Équipement d'élimination d'ammoniac selon l'une quelconque des revendications 1 à 3, comprenant un second appareil de mesure de concentration d'ammoniac qui mesure une concentration d'ammoniac dans un second gaz traité, traité par le second appareil d'élimination d'ammoniac.

6. Équipement d'élimination d'ammoniac selon la revendication 5, dans lequel le second appareil de mesure de concentration d'ammoniac est un appareil d'analyse de gaz de système de spectroscopie à cavité optique à balayage en longueur d'onde (WS-CRDS).

7. Équipement d'élimination d'ammoniac selon l'une quelconque des revendications 1 à 6, dans lequel le premier appareil d'élimination d'ammoniac comprend une zéolite logée dans celui-ci.

8. Équipement d'élimination d'ammoniac selon l'une quelconque des revendications 1 à 7, dans lequel le second appareil d'élimination d'ammoniac comprend un acide logé dans celui-ci.

9. Procédé d'élimination d'ammoniac comprenant l'utilisation de l'équipement d'élimination d'ammoniac selon l'une quelconque des revendications 1 à 8 pour traiter le gaz mixte.

10. Procédé d'élimination d'ammoniac selon la revendication 9, dans lequel le premier appareil d'élimination d'ammoniac est régénéré ou remplacé après qu'une percée se produit dans le premier appareil d'élimination d'ammoniac.

11. Procédé d'élimination d'ammoniac selon la revendication 9 ou 10, dans lequel le second appareil d'élimination d'ammoniac est régénéré ou remplacé avant qu'une percée se produise dans le second appareil d'élimination d'ammoniac.

12. Procédé de production d'hydrogène gazeux comprenant une étape d'utilisation de l'équipement d'élimination d'ammoniac selon l'une quelconque des revendications 1 à 8 pour éliminer l'ammoniac dans le gaz mixte.

[Fig. 1]

[Fig. 2]

[Fig. 3]

[Fig. 4]

**EP 3 388 135 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009087726 A
- JP 2011146175 A
- JP 2015059075 A
- US 6331281 B1